# EUROPEAN PATENT APPLICATION

(11) **EP 4 304 056 A1**
(43) Date of publication of application: **10.01.2024**
(21) Application number: 22762898.9
(22) Date of filing: 04.02.2022
(51) Int. Cl.: H02K 3/24, H02K 9/19

(54) **STATOR AND MOTOR EQUIPPED WITH SAME**

(30) Priority: 02.03.2021 JP 2021032941
(71) Applicant: Panasonic Intellectual Property Management Co., Ltd., Osaka 571-0057 (JP)
(72) Inventor: MAEKAWA, Takeru, Osaka 571-0057 (JP); ICHIKAWA, Tetsuro, Osaka 571-0057 (JP)
(74) Representative: SSM Sandmair
(86) International application number: PCT/JP2022/004533
(87) International publication number: WO 2022/185841

(57) **Abstract**

A stator includes a stator core formed to surround an axial center and having a plurality of teeth, and a coil attached to each of the plurality of teeth. The coil is formed by winding a conductive wire having a quadrangular cross section and stacking n turns (n is an integer of two or more). The plurality of teeth are connected to an inner periphery of the stator core at intervals along a circumferential direction of a motor. The plurality of coils disposed in the circumferential direction include one coil having a coil end that is an end part of the one coil in an axial direction and that is different in height from that of each of other coils.

## Description

### TECHNICAL FIELD

The present disclosure relates to a stator and a motor including the stator.

### BACKGROUND ART

In recent years, a demand for motors has increased in industrial and vehicular applications. In particular, the motors are desired to be improved in efficiency and be reduced in cost.

Known examples of a method for improving a motor in efficiency include a method for improving a space factor of a coil disposed in a slot of a stator. Increasing a space factor of coils can suppress a loss due to a current flowing into the coils when a motor is driven. As a method for improving the space factor of a coil, there is proposed a configuration in which a cast coil made of a copper material is disposed in a slot (e.g., see PTL 1).

Known examples of another method for improving a motor in efficiency include a configuration in which a refrigerant such as oil is injected to a coil disposed in a slot to cool the coil (e.g., see PTL 2). This configuration enables loss caused by a current flowing through the coil to be suppressed by cooling the coil.

During operation of the motor, a component through which a large current flows, such as a coil in a stator, generates heat most. The coil includes a part accommodated in a slot of a stator, the part being in contact with a stator core with an insulator or the like interposed therebetween. Thus, the heat generated in the part of the coil is dissipated to the outside through the stator core.

The coil also includes a part protruding to the outside of the slot, which may be referred to below as a coil end. The coil end is less likely to dissipate heat as compared with other parts of the coil, so that the heat is likely to be trapped in the coil end. Thus, the coil end causes more loss.

In consideration of this problem, PTL 2 discloses a configuration in which oil is injected as a refrigerant to a coil end through an oil pump and a supply pipe.

Unfortunately, this configuration causes the refrigerant not to be sufficiently blown to some coils in the stator depending on how to inject the refrigerant, so that the coils are less likely to be cooled. To sufficiently cool the coils, the refrigerant needs to be very increased in amount of supply.

To cool every coil in the stator by injection of the refrigerant, a supply pipe of the refrigerant is complicated in structure. To uniformly supply the refrigerant to a coil end of each coil, supply pressure needs to be greatly increased, and thus causing a pump for supplying the refrigerant to be increased in size.

### Citation List

### Patent Literature

PTL 1: German Patent Application Publication No. 102012212637
PTL 2: Unexamined Japanese Patent Publication No. H08-130856

### SUMMARY OF THE INVENTION

The present disclosure has been made in view of the above points. It is an object of the present disclosure to provide a stator in which heat dissipation of a coil is ensured when the stator includes a coil insufficiently cooled by a refrigerant, and a motor including the stator.

To achieve the above object, a stator according to the present disclosure is provided in a motor, the stator including a stator core formed to surround an axial center of the motor and having a plurality of teeth, and a plurality of coils attached to the respective plurality of teeth. The plurality of coils are each formed by winding a conductive wire having a quadrangular cross section and stacking n turns (n is an integer of two or more) of the conductive wire. The plurality of teeth are connected to an inner periphery of the stator core at intervals along a circumferential direction of the motor. One of the plurality of coils disposed in the circumferential direction includes a coil end that is an end part in an axial direction in which the axial center extends in the coil, the coil end being different in height from the other coils.

The plurality of coils may include a group of coils equal in height of the coil end, and one coil different in height of the coil end from the group of coils and disposed among the group of coils.

A motor according to the present disclosure includes: a rotor having a rotating shaft extending in the axial direction; the stator provided coaxially with the rotor and at a predetermined interval from the rotor; a motor case that accommodates the stator and the rotor inside; and a cooling device that supplies a refrigerant toward one of the coils. The cooling device includes: a pump that discharges the refrigerant; and a supply pipe that is connected to the pump while extending inside the motor case, and that supplies the refrigerant discharged from the pump toward the coil.

The supply pipe preferably includes a second injection port for injecting the refrigerant in the axial direction.

When the motor is used in which the axial direction intersects a gravity direction, the supply pipe preferably further includes a first injection port for injecting the refrigerant from above in the gravity direction.

The coil end of the coil to which the refrigerant is directly injected preferably has a height lower than a height of the coil end of the coil to which the refrigerant is not directly injected.

The coil end includes a first coil end that is one end part in the axial direction and a second coil end that is the other end part, and the refrigerant is preferably injected toward the first coil end.

The refrigerant is preferably injected toward both the first coil end and the second coil end.

The first coil end has a surface area that may be smaller than a surface area of the second coil end.

The first coil end has a surface area that may be larger than a surface area of the second coil end.

In particular, the motor according to the present disclosure is preferably used in which the axial direction of the motor intersects the gravity direction.

When a stator is provided inside with a coil that is insufficiently cooled by a refrigerant, the present disclosure enables heat dissipation of the coil to be secured. Thus, the entire stator and thus the motor can be efficiently cooled.

### BRIEF DESCRIPTION OF THE DRAWINGS

Fig. 1A is a schematic cross-sectional view of a motor according to a first exemplary embodiment taken along an axial direction of the motor.
Fig. 1B is a schematic cross-sectional view of the motor according to the first exemplary embodiment taken along a radial direction of the motor.
Fig. 2 is a schematic diagram of a stator viewed from the axial direction of the motor according to the first exemplary embodiment.
Fig. 3 is a schematic diagram of a k-th turn of a coil as viewed from the radial direction.
Fig. 4A is a cross-sectional view taken along line IVA-IVA in Fig. 2.
Fig. 4B is a cross-sectional view taken along line IVB-IVB in Fig. 2.
Fig. 5 is a schematic diagram of a stator according to a first modification as viewed from the axial direction.
Fig. 6 is a schematic cross-sectional view of a motor according to a second modification taken along an axial direction of the motor.
Fig. 7 is a schematic cross-sectional view of a main part of a stator of the motor according to the second modification.
Fig. 8 is a schematic cross-sectional view of a motor according to a second exemplary embodiment taken along an axial direction of the motor.
Fig. 9 is a schematic cross-sectional view of another motor according to the second exemplary embodiment taken along an axial direction of the other motor.
Fig. 10 is a schematic cross-sectional view of a main part of a stator of the motor illustrated in Fig. 9.
Fig. 11 is a schematic cross-sectional view of a motor according to another modification taken along an axial direction of the motor.
Fig. 12 is a schematic cross-sectional view of a motor according to yet another modification taken along an axial direction of the motor.

### DESCRIPTION OF EMBODIMENT

Hereinafter, an exemplary embodiment of the present disclosure will be described in detail with reference to the drawings. The following description of a preferable exemplary embodiment is merely illustrative in nature and is not intended to limit the present disclosure, and application or use of the present disclosure.

### (First exemplary embodiment)

### [Configuration of motor]

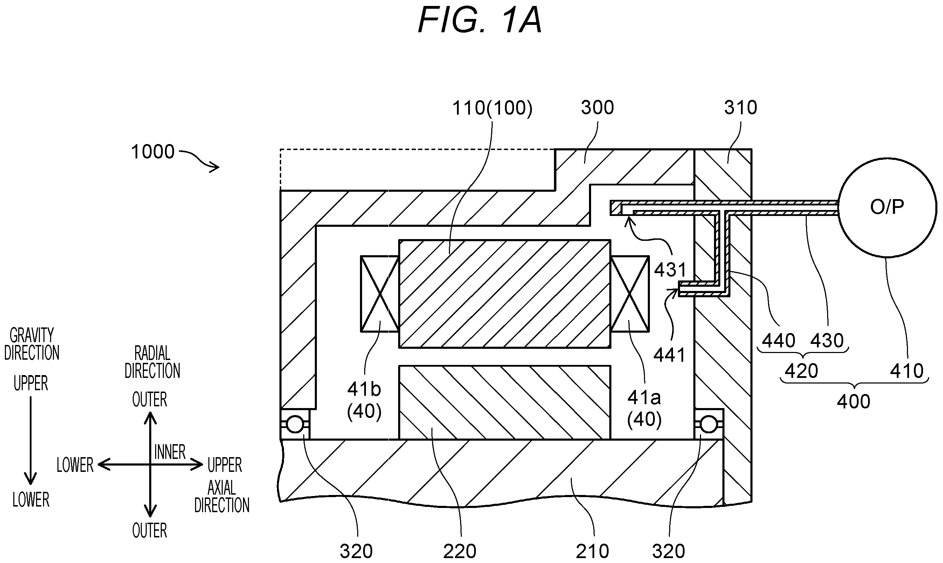

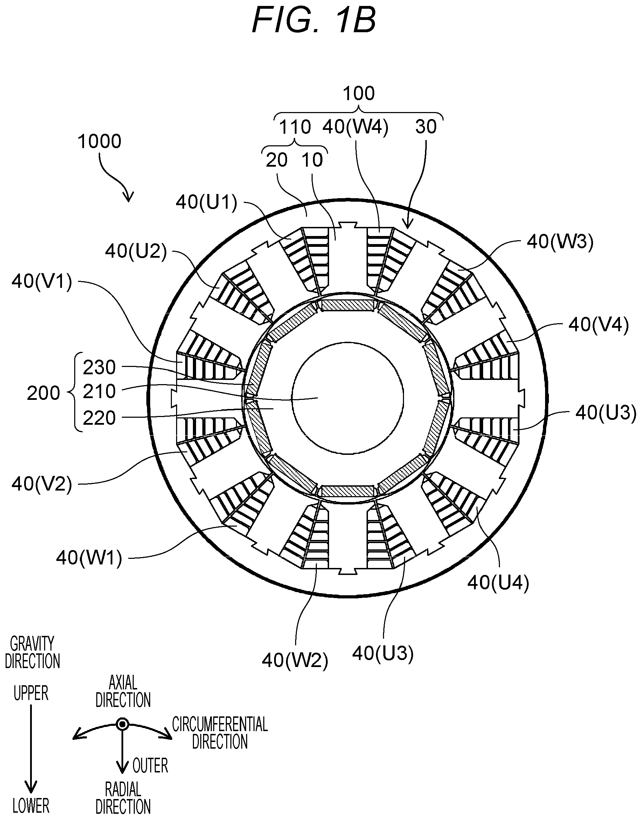

Fig. 1A is a schematic cross-sectional view of motor 1000 according to a first exemplary embodiment taken along an axial direction of motor 1000. Fig. 1B is a schematic cross-sectional view of motor 1000 according to the first exemplary embodiment taken along a radial direction of motor 1000. In the following description, a radial direction of motor 1000 may be referred to as a "radial direction", an outer circumferential direction thereof may be referred to as a "circumferential direction", and a direction in which an axial center included in rotating shaft 210 of motor 1000 extends (a direction perpendicular to the paper surface in Fig. 1B) may be referred to as an "axial direction". In the radial direction, an axial center side of motor 1000 may be referred to as inner or an inner side, and an outer peripheral side may be referred to as outer or an outer side. Motor 1000 illustrated in Fig. 1A is attached to equipment or an apparatus (not illustrated) such that the radial direction is parallel to the gravity direction. The term, "parallel", in this case means parallel including manufacturing tolerance of motor 1000 and mounting tolerance to the apparatus or the like, and thus does not require the radial direction and the gravity direction to be parallel to each other in a strict sense.

In the axial direction, a side on which end plate 310 is provided may be referred to as an upper or an upper side, and an opposite side may be referred to as a lower or a lower side. When viewed from the axial direction, motor 1000 has an axial center aligning with an axial center of rotating shaft 210.

As illustrated in Figs. 1A and 1B, motor 1000 includes stator 100, rotor 200, motor case 300, and end plate 310. Motor 1000 is provided with cooling device 400 attached. Details of structure of stator 100 and rotor 200 will be described later.

Motor case 300 is a bottomed tubular metal member provided in its upper part with an opening. End plate 310 is a plate-shaped metal member provided to close the opening of motor case 300. End plate 310 may be a resin member.

Cooling device 400 includes oil pump 410 and supply pipe 420. Supply pipe 420 is a metal member having a hollow structure. Supply pipe 420 includes main pipe 430 and branch pipe 440. Supply pipe 420 has one end connected to oil pump 410. Main pipe 430 extends into motor case 300 along a radially outer side of stator 100. Main pipe 430 branches inside end plate 310. Branch pipe 440 branched extends inside motor case 300. Thus, supply pipe 420 has two end parts disposed inside motor case 300. Main pipe 430 is provided at its end part with first injection port 431. Branch pipe 440 is provided at its end part with second injection port 441. First injection port 431 is disposed on a radially outer side of first coil end 41a. Second injection port 441 is disposed axially above first coil end 41a.

Supply pipe 420 may be formed of a metal member. For example, supply pipe 420 can be formed of a resin member. Supply pipe 420 formed of a resin member can be expected to have high insulation properties.

Here, first coil end 41a is an upper end part of coil 40 in the axial direction. As described above, first coil end 41a is a part of coil 40, the part protruding outside slot 30. Second coil end 41b is a lower end part of coil 40 in the axial direction. Second coil end 41b is a part of coil 40, the part protruding outside slot 30. Supply pipe 420 may be branched outside motor case 300 or may be branched inside motor case 300.

When oil pump 410 is driven, oil serving as a refrigerant discharged from oil pump 410 is fed under pressure into motor case 300 through supply pipe 420. The oil is injected from both first injection port 431 and second injection port 441 toward first coil end 41a to cool first coil end 41a. As is clear from Fig. 1A, the oil is injected from first injection port 431 toward a radially outer surface of first coil end 41a. The oil is injected from second injection port 441 toward an axially upper side surface of first coil end 41a. The oil injected to first coil end 41a is accumulated in a part located below the axial center of motor 1000 in the gravity direction inside motor case 300. The oil injected is further recovered in an oil reservoir (not illustrated).

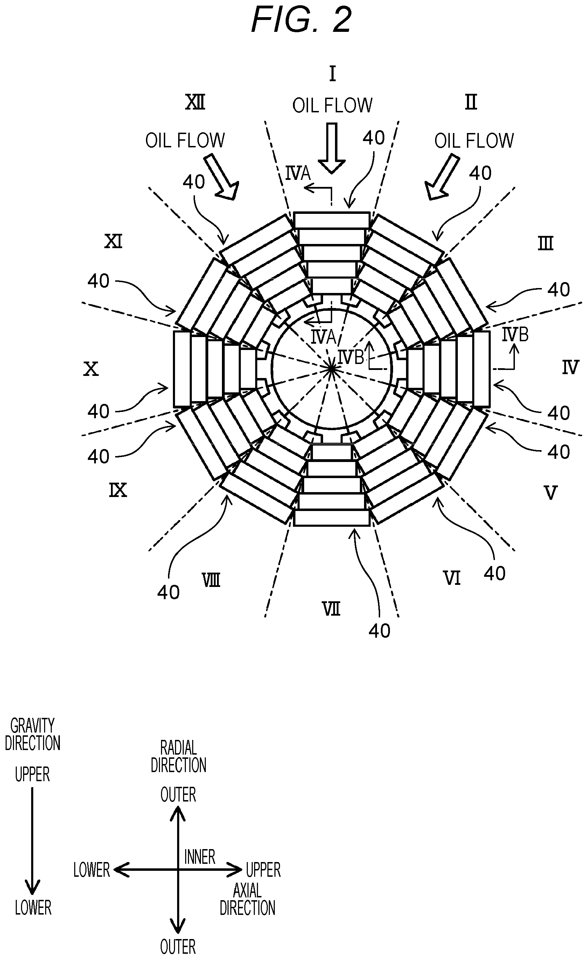

A plurality of first injection ports 431 are provided at an end part of main pipe 430, and a plurality of second injection ports 441 are provided at the end part of branch pipe 440. The oil is injected toward first coil ends 41a of each of the plurality of coils 40 (e.g., see Fig. 2). Main pipe 430 and branch pipe 440 may each extend by a predetermined length in the circumferential direction while locating its end part inside motor case 300.

As illustrated in Fig. 1B, stator 100 includes yoke 20 having an annular ring shape, and a plurality of teeth 10 connected to an inner periphery of yoke 20 and provided at equal intervals along the inner periphery. Yoke 20 to which teeth 10 are connected may be referred to as stator core 110.

Stator 100 further includes slots 30 provided between corresponding teeth 10 adjacent to each other in the circumferential direction and coils 40 accommodated in respective slots 30. Stator 100 is disposed on a radially outer side of rotor 200 with a predetermined interval between stator 100 and rotor 200.

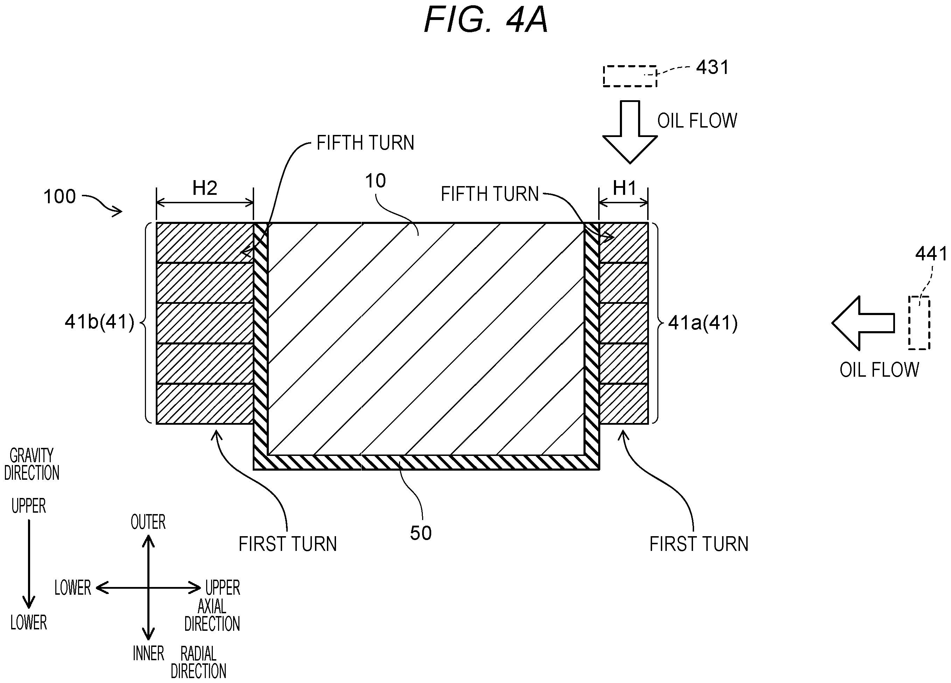

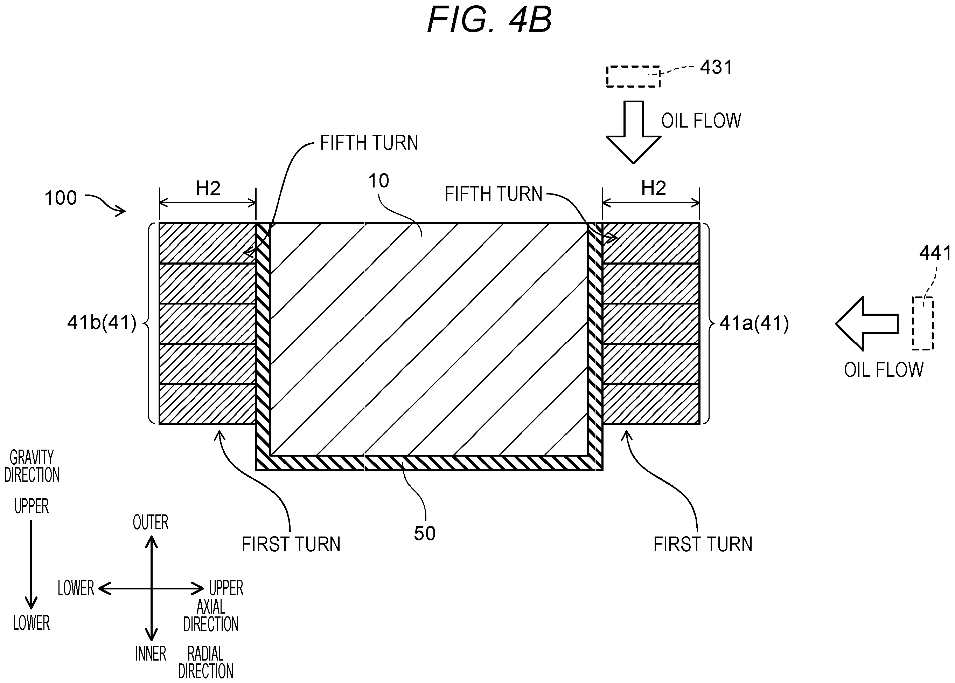

Teeth 10 and yoke 20 are each formed by stacking electromagnetic steel sheets containing silicon and the like and having been blanked, for example. Coils 40 are attached to respective teeth 10 with respective insulators 50 (see Figs. 4B and 4A) interposed therebetween, and are accommodated in respective slots 30. As described above, coil 40 includes first coil end 41a and second coil end 41b as coil ends 41. The shape of coil 40 will be described in detail later.

Corresponding to a phase of a current flowing through coil 40, coils 40 may be referred to as coils U1 to U4, V1 to V4, or W1 to W4.

Rotor 200 includes rotating shaft 210, rotor core 220 provided at its axial center with rotating shaft 210, and a plurality of magnets 230. The plurality of magnets 230 are embedded in rotor core 220 and disposed along the outer circumferential direction of rotating shaft 210 while having respective N poles and S poles that are alternately disposed facing stator 100. Magnet 230 can be appropriately changed in material, shape, and properties of material depending on output of motor 1000 and the like. Rotor core 220 is formed by stacking electromagnetic steel sheets containing silicon and the like and having been blanked, for example.

Coils U1 to U4, V1 to V4, and W1 to W4 are independently connected in series. Three phase currents of U, V, and W phases having a phase difference of 120° in terms of an electrical angle from each other are supplied to coils U1 to U4, V1 to V4, and W1 to W4, respectively, to excite the coils. As a result, a rotating magnetic field is generated in stator 100. The rotating magnetic field and a magnetic field generated by magnets 230 provided in rotor 200 interact with each other to generate torque, and thus rotating shaft 210 is rotated while being supported by bearing 320.

Even when coils U1 to U4, V1 to V4, and W1 to W4 are connected to stator 100 in parallel or in other connection configurations, the present disclosure can achieve similar operational effects.

### [Structure of main part of stator and coil]

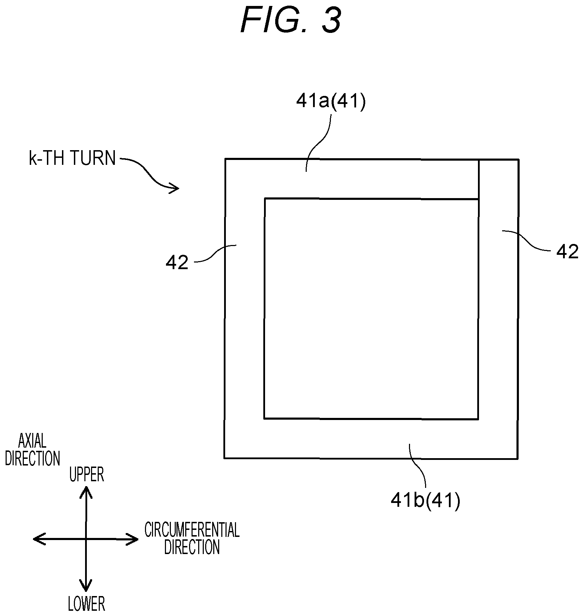

Fig. 2 is a schematic diagram of a stator viewed from the axial direction. Fig. 3 is a schematic diagram of a k-th turn of a coil as viewed from the radial direction. Fig. 4A is a cross-sectional view taken along line IVA-IVA in Fig. 2. Fig. 4B is a cross-sectional view taken along line IVB-IVB in Fig. 2. For convenience of description, yoke 20 is not illustrated in Figs. 2, 4A, and 4B. Although the number of windings of coil 40, or the number of turns, is set to five, the present disclosure is not particularly limited thereto. The number of turns of coil 40 may be n (n is an integer of two or more).

As illustrated in Fig. 2, coil 40 is a component formed by spirally winding a conductive wire made of copper or the like. Coil 40 is a formed coil formed by forming the conductive wire. Although not illustrated, an insulating film is formed on a surface of the conductive wire constituting coil 40.

The term, "formed coil", herein does not include a coil in which a conductive wire constant in width and thickness is merely wound in a spiral shape.

The formed coil is formed as follows: For, example, a plurality of rectangular plate members different in length, width, or thicknesses are prepared; and these plate members are joined by cold pressure welding, welding, or another method. The plate members are each made of a low-resistance material such as copper or aluminum.

Alternatively, the formed coil may be formed by so-called casting in which copper or the like is melted and poured into a casting mold. The formed coil may be formed by bending a conductive wire in a plate shape at a predetermined position, the conductive wire being preliminarily formed to be different in width or thicknesses midway. Alternatively, a conductive wire in a plate shape having a constant width and thickness may be rolled at a predetermined place, and wound in a spiral shape after being changed in width or thickness midway to form a formed coil. In short, the formed coil is formed by winding a conductive wire and further performing another processing on the conductive wire, or by a method different from a method in which the conductive wire is simply wound.

Coil 40 is a formed coil, so that each turn can be freely changed in shape as described later.

As illustrated in Fig. 3, a k-th turn (k is an integer of 1 ≤ k ≤ n) of coil 40 has an outline in a quadrangular annular shape having four sides when viewed from the radial direction. Two sides facing each other and extending in the circumferential direction correspond to respective coil ends 41. As described above, coil end 41 located on an upper side in the axial direction is first coil end 41a. Coil end 41 located on a lower side in the axial direction is second coil end 41b. Additionally, two sides 42 facing each other and extending in the axial direction are accommodated inside slot 30.

The present exemplary embodiment allows the first turn to be located close to the axial center of motor 1000, and an n-th turn to be located close to yoke 20. That is, the n-th turn is disposed on a radially outer side of the first turn.

As illustrated in Fig. 2, twelve coils 40 are disposed at equal intervals along the circumferential direction in order from I to XII. Coils 40 disposed at respective positions I, II, and XII have respective first coil ends 41a toward which oil is injected from first injection port 431 and second injection port 441 of supply pipe 420.

The present exemplary embodiment allows first coil end 41a to be varied in height depending on a position of coil 40 in stator 100.

Specifically, coils 40 disposed at respective positions I to III, V to IX, and XI and XII, include respective first coil ends 41a each having height H1, respective second coil ends 41b each having height H2 (> H1) as illustrated in Fig. 4A. Coils 40 disposed at respective other positions, such as positions IV and X, each include first coil end 41a and second coil end 41b each of which has height H2 as illustrated in Fig. 4B.

As described above, oil as a refrigerant is directly injected to first coil end 41a of coil 40 disposed at each of positions I, II, and XII. The oil is likely to flow to first coil end 41a of coil 40 disposed at each of positions III and XI from coil 40 disposed at each of positions II and XII adjacent to each other. Thus, coils 40 disposed at respective positions I to III, XI, and XII, each include first coil end 41a that is cooled by heat exchange with the oil. As a result, temperature rise of coil 40 is suppressed.

As described above, the oil injected to coil 40 is temporarily accumulated in a part located below the axial center of motor 1000 in the gravity direction inside motor case 300. Thus, coils 40 located at respective positions V to IX are cooled by being in direct contact with the accumulated oil. Thus, the temperature rise of coil 40 is suppressed.

In contrast, coils 40 disposed at respective positions IV and X are affected by the gravity so that an inflow of oil from coils 40 disposed at respective positions III and XI adjacent to each other decreases. These coils 40 are disposed inside motor case 300 and near the axial center of motor 1000. This placement causes a contact area with the oil accumulated inside motor case 300 to be significantly reduced to smaller than that of coil 40 located at each of positions V to IX. As a result, coils 40 disposed at respective positions IV and X each include first coil end 41a that is insufficiently cooled, so that coil 40 is likely to increase in temperature. Thus, loss in coil 40 increases, and the loss may cause motor 1000 to be deteriorated in efficiency.

The present exemplary embodiment thus allows coils 40 disposed at respective positions IV and X that are less likely to be cooled by oil to each include first coil end 41a having a height (= H2) set to be higher than a height (= H1 < H2) of first coil end 41a of each of coils 40 disposed at respective other positions.

This configuration enables coils 40 disposed at respective positions IV and X to each have first coil end 41a increased in surface area and volume to increase the amount of heat radiation to more than the amount of heat radiation in first coil end 41a of each of coils 40 disposed at respective other positions. As a result, temperature rise of each of coils 40 disposed at respective positions IV and X can be reduced. Additionally, the temperature rise can be reduced in the plurality of coils 40 as a whole disposed in stator 100, so that a decrease in efficiency of motor 1000 can be reduced.

Structure of coil 40 including first coil end 41a higher in height than that in coil 40 at another position is not limited to the above-described example. Coil 40 having low cooling efficiency by oil needs to include first coil end 41a higher in height than that of coil 40 at another position. For example, when a small amount of oil is accumulated inside motor case 300, coils 40 disposed at respective positions V and IX may also be insufficiently cooled by the oil. In such a case, coils 40 disposed at respective positions V and IX each include first coil end 41a in the same shape as that illustrated in Fig. 4A. When a small amount of oil flows to coils 40 disposed at respective positions III and XI, these coils 40 each also include first coil end 41a in the same shape as that illustrated in Fig. 4A.

### [Effects and the like]

As described above, stator 100 according to the present exemplary embodiment includes at least stator core 110 formed to surround the axial center and having a plurality of teeth 10, and coil 40 attached to each of the plurality of teeth 10.

Coil 40 is formed by winding a conductive wire having a quadrangular cross section and stacking n turns (n is an integer of two or more).

The plurality of teeth 10 are connected to an inner periphery of stator core 110 at intervals along the circumferential direction that is the outer peripheral direction of motor 1000. The axial direction, in which the axial center of motor 1000 extends, intersects the gravity direction.

A plurality of coils 40 disposed in the circumferential direction include at least one coil 40 having coil end 41 that is an end part of coil 40 in the axial direction, or first coil end 41a in the present exemplary embodiment, coil end 41 or first coil end 41a being different in height from that of each of other coils 40. Specifically, coil 40 including first coil end 41a that may be insufficiently cooled by the oil is configured to have height H2 of first coil end 41a, height H2 being set higher than height H1 of first coil end 41a of coil 40 in which first coil end 41a is sufficiently cooled by the oil.

This configuration enables first coil end 41a to be increased in surface area and volume to increase the amount of heat radiation to more than the amount of heat radiation in first coil end 41a of each of coils 40 disposed at respective other positions. As a result, temperature rise can be reduced in the plurality of coils 40 as a whole disposed in stator 100, so that a decrease in efficiency of motor 1000 can be reduced.

Additionally, the oil is not required to be blown to all coils 40 in stator 100, and thus simplifying structure of oil supply pipe 420. Thus, the oil can be supplied under low pressure, so that oil pump 410 can be prevented from increasing in size. Additionally, a discharge rate of the oil can be reduced. As a result, cooling device 400 and thus motor 1000 can be reduced in cost.

Coil 40 is a formed coil described above, so that first coil end 41a can be easily changed in height in coil 40 at a desired position.

Motor 1000 according to the present exemplary embodiment includes at least rotor 200 provided at its axial center with rotating shaft 210, stator 100 provided coaxially with rotor 200 and at a predetermined interval from rotor 200, and motor case 300 accommodating stator 100 and rotor 200 inside.

Motor 1000 further includes cooling device 400 that supplies oil as a refrigerant toward at least one coil 40.

Cooling device 400 includes oil pump (pump) 410 that discharges oil, and supply pipe 420 that is connected to oil pump 410 and extends inside motor case 300 to supply oil discharged from oil pump 410 toward first coil end 41a of coil 40.

The present exemplary embodiment enables the oil supplied from cooling device 400 to be injected to coil 40 to reliably cool coil 40 that is a main heat source in motor 1000. As a result, thermal loss caused in coil 40 can be reduced, and thus motor 1000 can be improved in efficiency.

A plurality of coils 40 include coil 40 that is not sufficiently cooled by the oil and in which height H2 of first coil end 41a is set to be higher than height H1 of first coil end 41a of coil 40 that is sufficiently cooled by the oil. More specifically, height H2 of first coil end 41a of coil 40 to which the oil is not directly injected is set higher than height H1 of first coil end 41a of coil 40 to which the oil is directly injected. This configuration enables the amount of heat radiation from first coil end 41a to be increased in coil 40 that is not sufficiently cooled by the oil. Thus, temperature rise can be reduced in the plurality of coils 40 as a whole disposed in stator 100. Additionally, a decrease in efficiency of motor 1000 can be reduced.

Then, supply pipe 420 can be simplified in structure and oil pump 410 can be prevented from increasing in size. Additionally, a discharge rate of the oil can be reduced. As a result, cooling device 400 and thus motor 1000 can be reduced in cost.

Supply pipe 420 includes second injection port 441 for injecting oil in the axial direction. This configuration enables the oil to be reliably blown to a region having a large surface area in first coil end 41a. Supply pipe 420 preferably further includes first injection port 431 for injecting oil from above in the gravity direction. This configuration enables first coil end 41a to be reliably cooled by the oil.

Coil end 41 includes first coil end 41a that is one end part in the axial direction and second coil end 41b that is the other end part. The oil is injected at least toward first coil end 41a.

When the oil is supplied to first coil end 41a and the oil is not supplied to second coil end 41b, coil 40 including first coil end 41a with height H1 and coil 40 including first coil end 41a with height H2 (> H1) are mixed as described above. Then, a plurality of coils 40 include respective second coil ends 41b with heights that are each set to an equal value (= H2).

This configuration enables increasing the amount of heat radiation in second coil end 41b to which the oil is not supplied in every coil 40 in stator 100. As a result, temperature rise can be reduced in the plurality of coils 40 as a whole disposed in stator 100, so that a decrease in efficiency of motor 1000 can be reduced.

### <First modification>

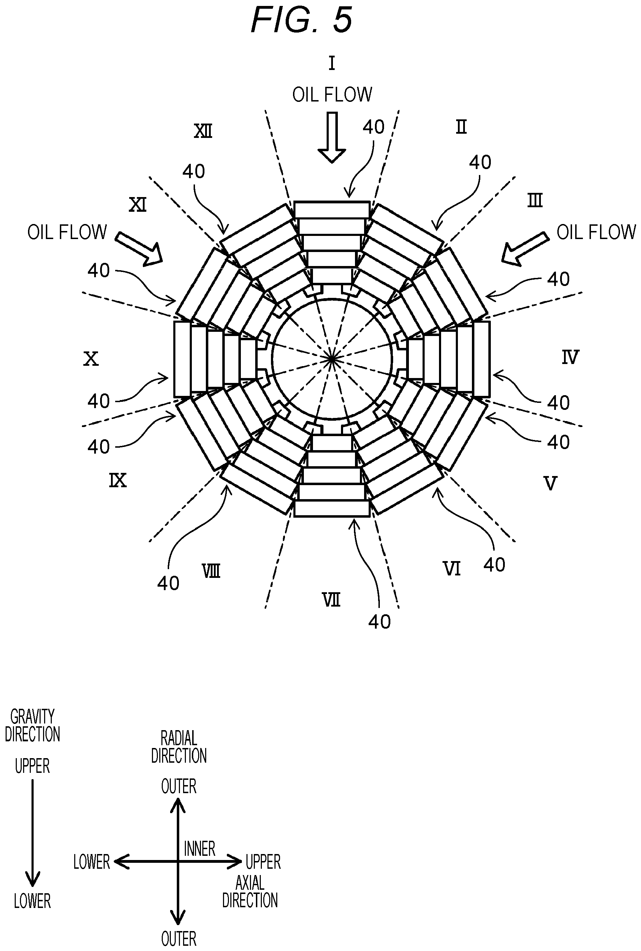

Fig. 5 is a schematic diagram of stator 100 according to a first modification as viewed from the axial direction. For convenience of description, Fig. 5 and sequent drawings denote the same parts as those of the first exemplary embodiment with the same reference numerals, and details thereof will not be described.

Stator 100 and thus motor 1000 of the present modification is different in position of coil 40 to which the oil is directly injected from stator 100 and thus motor 1000 of the first exemplary embodiment. Specifically, the oil is directly injected to coils 40 disposed at respective positions I, III, and XI as illustrated in Fig. 5. In this case, coils 40 disposed at respective positions I, III, and XI are similar in shape to that illustrated in Fig. 4A. In contrast, coil 40 disposed at position II located between position I and position III includes first coil end 41a with height H2 as in illustrated in Fig. 4B. Coil 40 disposed at position XI located between position X and position XII also includes first coil end 41a with height H2 as in illustrated in Fig. 4B.

Coil 40 including first coil end 41a with height H2 is not particularly limited to a position in the example illustrated in Fig. 5. A plurality of coils 40 may include a group of coils equal in height of first coil end 41a, and at least one coil 40 different in height of first coil end 41a from the group of coils and disposed among the group of coils.

That is, even the present modification allows height H2 of first coil end 41a of coil 40 to which the oil is not directly injected to be set higher than height H1 of first coil end 41a of coil 40 to which the oil is directly injected. This configuration enables the amount of heat radiation from first coil end 41a to be increased in coil 40 that is not sufficiently cooled by the oil to reduce temperature rise in the plurality of coils 40 as a whole disposed in stator 100. Additionally, a decrease in efficiency of motor 1000 can be reduced.

### <Second modification>

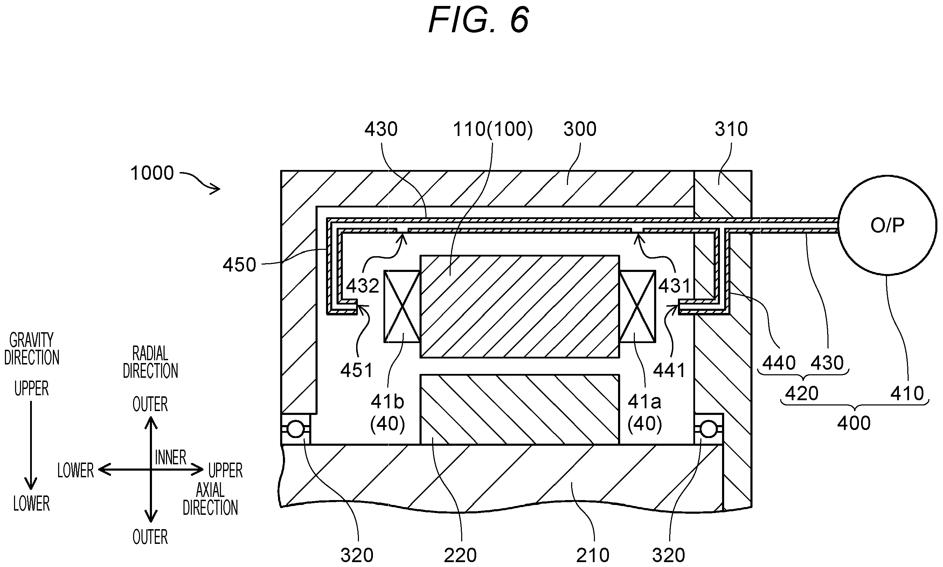

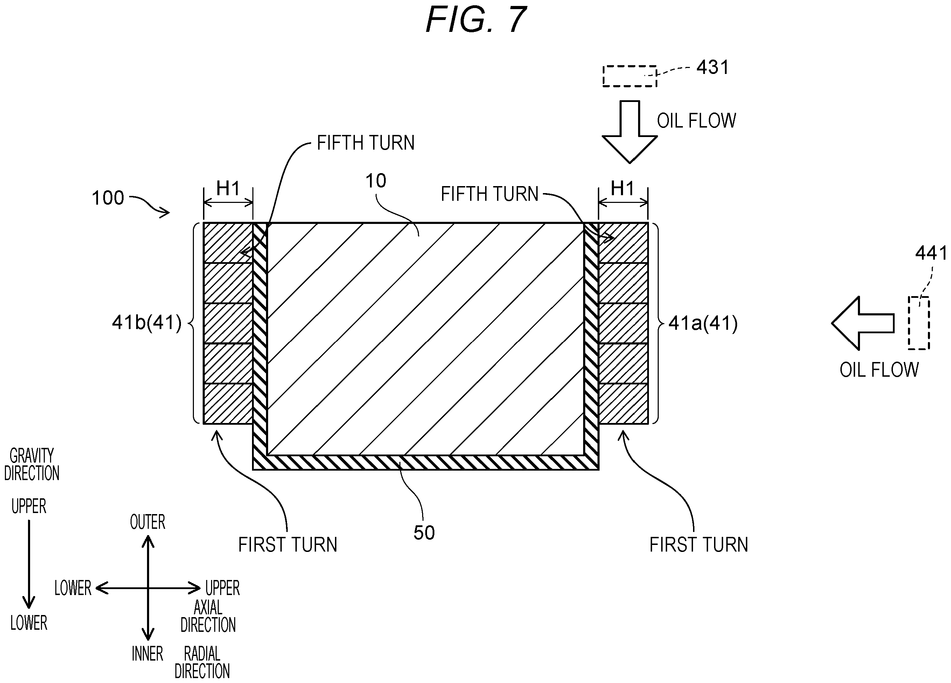

Fig. 6 is a schematic cross-sectional view of motor 1000 according to a second modification taken along an axial direction of the motor. Fig. 7 is a schematic cross-sectional view of a main part of stator 100 of motor 1000 according to the second modification. For convenience of description, Figs. 6 and 7, and sequent drawings denote the same parts as those of the first exemplary embodiment with the same reference numerals, and details thereof will not be described.

Motor 1000 of the present modification illustrated in Fig. 6 is different in shape of supply pipe 420 from motor 1000 of the first exemplary embodiment illustrated in Fig. 1A. Specifically, main pipe 430 passes between stator 100 and motor case 300 and extends to a radially outer side of second coil end 41b. A pair of first injection ports includes first injection port 431 on one side that is an intermediate part of main pipe 430 and disposed radially outside first coil end 41a. The pair of first injection ports includes first injection port 432 on the other side that is an intermediate part of main pipe 430 and disposed radially outside second coil end 41b. Thus, oil injected from the pair of first injection ports 431, 432 is blown to radially outer surface of each of first coil end 41a and second coil end 41b.

As illustrated in Fig. 6, another branch pipe 450 extends from the end part of main pipe 430 toward the axial center of motor 1000. Branch pipe 450 is provided at its end part with second injection port 451 facing an axially lower surface of second coil end 41b of a pair of second injection ports 441, 451. Thus, oil injected from second injection port 441 facing first coil end 41a of the pair of second injection ports 441, 451 is brown to the axially upper surface of first coil end 41a, and oil injected from second injection port 451 facing second coil end 41b is brown to the axially lower surface of second coil end 41b.

The present modification allows coils 40 disposed at respective positions I to III, V to IX, XI, and XII to each include first coil end 41a and second coil end 41b that are each set to have height H1 (< H2) as illustrated in Fig. 7.

The present modification enables injecting oil as a refrigerant not only to first coil end 41a but also to second coil end 41b. The present modification also allows coil 40 at a position having higher cooling efficiency using the oil than coils 40 disposed at respective positions IV and X to have a low height of not only first coil end 41a but also second coil end 41b.

This configuration enables achieving effects similar to those achieved by the configuration shown in the first exemplary embodiment. That is, the amount of heat radiation from first coil end 41a and second coil end 41b can be increased in coil 40 that is not sufficiently cooled by oil. Thus, temperature rise can be reduced in the plurality of coils 40 as a whole disposed in stator 100. Additionally, a decrease in efficiency of motor 1000 can be reduced.

Then, a discharge rate of oil can be reduced, so that oil pump 410 can be prevented from increasing in size. As a result, cooling device 400 and thus motor 1000 can be reduced in cost.

The configuration of the first exemplary embodiment does not allow supply pipe 420 to be routed to near second coil end 41b. Thus, supply pipe 420 can be reduced in disposition space in motor case 300. As a result, motor 1000 can be reduced in volume by a part surrounded by the broken line illustrated in Fig. 1A as compared with the configuration illustrated in Fig. 6. Thus, motor 1000 can be downsized.

### (Second exemplary embodiment)

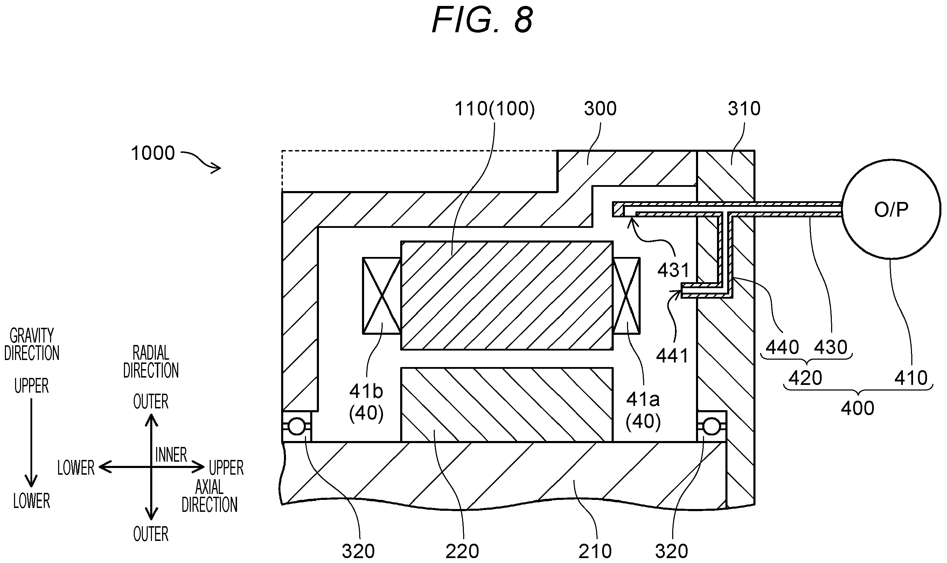

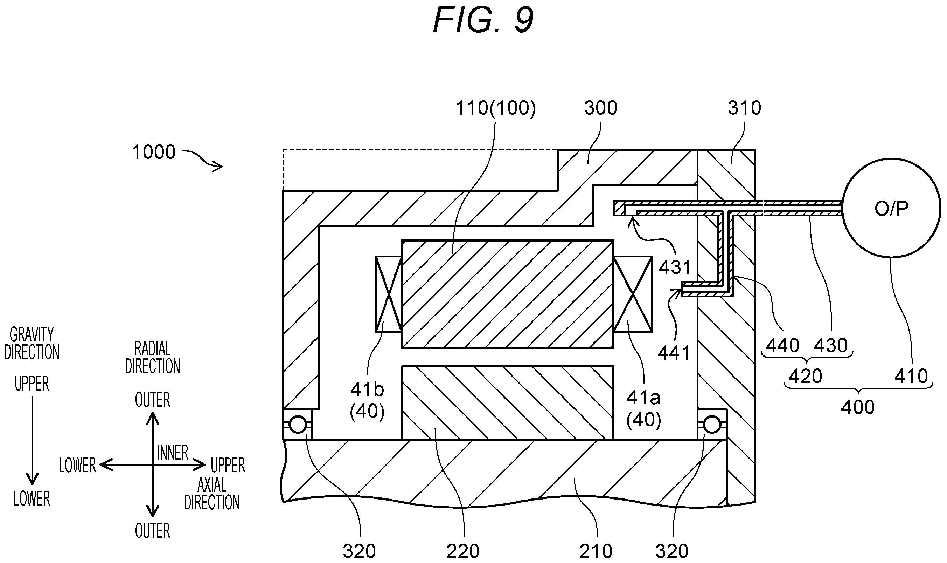

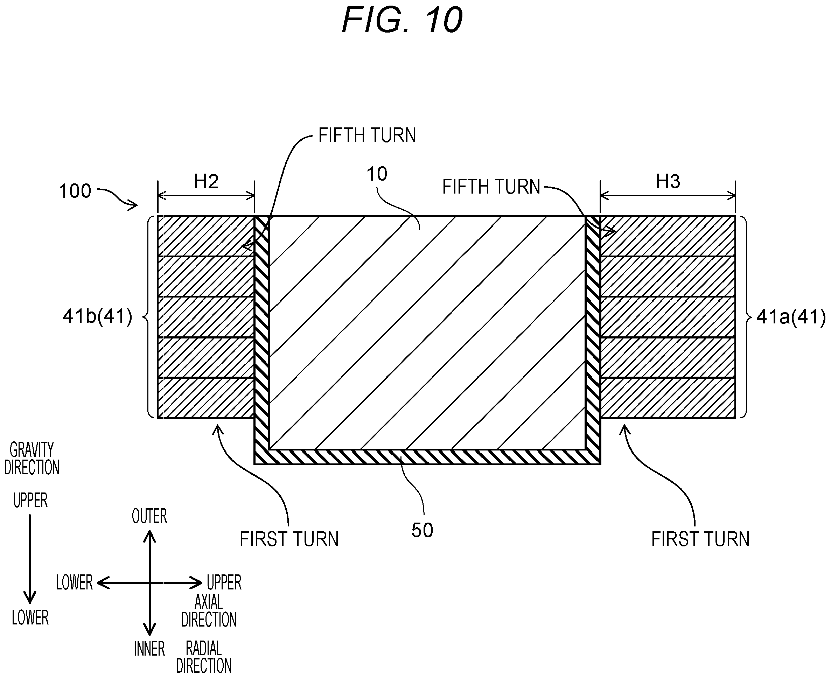

Fig. 8 is a schematic cross-sectional view of motor 1000 according to a second exemplary embodiment taken along an axial direction of the motor. Fig. 9 is a schematic cross-sectional view of another motor 1000 according to the second exemplary embodiment taken along an axial direction of the other motor. Fig. 10 is a schematic cross-sectional view of a main part of stator 100 of motor 1000 illustrated in Fig. 9.

Motor 1000 illustrated in Fig. 8 is identical in configuration to motor 1000 shown in the first exemplary embodiment. However, second coil end 41b to which the oil as refrigerant is not blown has a larger surface area than first coil end 41a to which the oil is blown. Second coil end 41b may also have larger volume than first coil end 41a.

This configuration enables second coil end 41b to have larger heat radiation area than first coil end 41a. Thus, the amount of heat radiation at second coil end 41b can be increased. Then, the oil is injected to first coil end 41a having a small heat radiation area and in which heat is likely to be trapped, so that the amount of heat radiation from first coil end 41a can be increased by heat exchange with the oil. That is, heat generated by coil 40 can be reliably dissipated while no oil is required to be injected to second coil end 41b. Thus, motor 1000 can be improved in efficiency. Then, a discharge rate of the oil can be reduced, so that oil pump 410 can be downsized. As a result, cooling device 400 and thus motor 1000 can be reduced in cost.

The present exemplary embodiment enables supply pipe 420 to be reduced in disposition space in motor case 300 as in described in the second modification. As a result, motor 1000 can be reduced in volume by a part surrounded by the broken line illustrated in Fig. 8 as compared with the configuration illustrated in Fig. 6. Thus, motor 1000 can be downsized. Additionally, first coil end 41a can have a smaller volume than second coil end 41b. This configuration enables motor 1000 to be reduced in size in the axial direction. Thus, motor 1000 can be downsized.

The surface area of second coil end 41b is appropriately set in accordance with a required amount of heat radiation from second coil end 41b. First coil end 41a and second coil end 41b can be appropriately changed in shape within a range in which first coil end 41a has a smaller surface area than second coil end 41b.

As illustrated in Fig. 9, first coil end 41a to which the oil as a refrigerant is blown may have a larger surface area than second coil end 41b to which the oil is not blown in motor 1000. First coil end 41a may have larger volume than second coil end 41b.

The amount of heat radiation from coil 40 can be reliably increased more by directly injecting oil to coil end 41 than by dissipating heat from coil end 41 to an external atmosphere. Thus, the oil may be injected to first coil end 41a having a larger surface area than second coil end 41b to actively cool coil 40 as illustrated in Fig. 9.

Fig. 10 is a schematic cross-sectional view of a main part of stator 100 of motor 1000 illustrated in Fig. 9. Specifically, Fig. 10 corresponds to each of coils 40 disposed at respective positions I to III, V to IX, XI, and XII illustrated in Fig. 2.

As illustrated in Fig. 10, coil 40 includes first coil end 41a with height H3 (> H2), while including second coil end 41b with height H2 (> H1). This configuration enables coil 40 actively cooled by the oil to include first coil end 41a having a larger surface area and volume than second coil end 41b. However, structure in which first coil end 41a has a larger surface area and volume than second coil end 41b is not particularly limited to the example illustrated in Fig. 10. Although not illustrated, coils 40 disposed at respective positions IV and X are each similar in shape to that illustrated in Fig. 4B.

Even the examples illustrated in Figs. 9 and 10 enable heat generated by coil 40 to be reliably dissipated to improve efficiency of motor 1000 while requiring no oil to be injected to second coil end 41b. Then, a discharge rate of the oil can be reduced, so that oil pump 410 can be downsized. As a result, cooling device 400 and thus motor 1000 can be reduced in cost. Additionally, supply pipe 420 can be reduced in disposition space in motor case 300. Thus, motor 1000 can be downsized.

Coil 40 illustrated in Fig. 10 enables first coil end 41a and second coil end 41b to be appropriately changed in shape within a range in which first coil end 41a has a larger surface area than second coil end 41b.

Motor 1000 illustrated in Fig. 9 may allow every coil 40 in stator 100 to be similar in shape to that illustrated in Fig. 4A. That is, every coil 40 may be configured to include first coil end 41a having a lower height than second coil end 41b. Motor 1000 illustrated in Fig. 10 may allow every coil 40 in stator 100 to be similar in shape to that illustrated in Fig. 10. That is, every coil 40 may be configured to include first coil end 41a having a higher height than second coil end 41b.

### (Other exemplary embodiments)

Another exemplary embodiment can be formed by appropriately combining components described in the first and second exemplary embodiments and the first and second modifications. For example, coil 40 of the second modification illustrated in Fig. 7 may be applied to stator 100 and motor 1000 shown in the first exemplary embodiment or the first modification.

Although herein coil end 41 has a height that is equal for each turn in one coil 40, each turn may be different in height. Alternatively, one or more turns may be equal in height while remaining turns may be different in height.

Motor 1000 with three phases and twelve slots has been described herein as an example. However, the present invention is not particularly limited thereto, and motor 1000 with another structure, such as three phases and six slots, may be used.

The structure of supply pipe 420 is also not particularly limited to the examples illustrated in Figs. 1A and 6. For example, first injection ports 431,432 may not be provided. Alternatively, branch pipes 440, 450 and second injection ports 441, 451 may not be provided.

The structure of motor 1000 of the present disclosure is not limited to the examples shown in the first and second exemplary embodiments and the first and second modifications, and motor 1000 may take another structure.

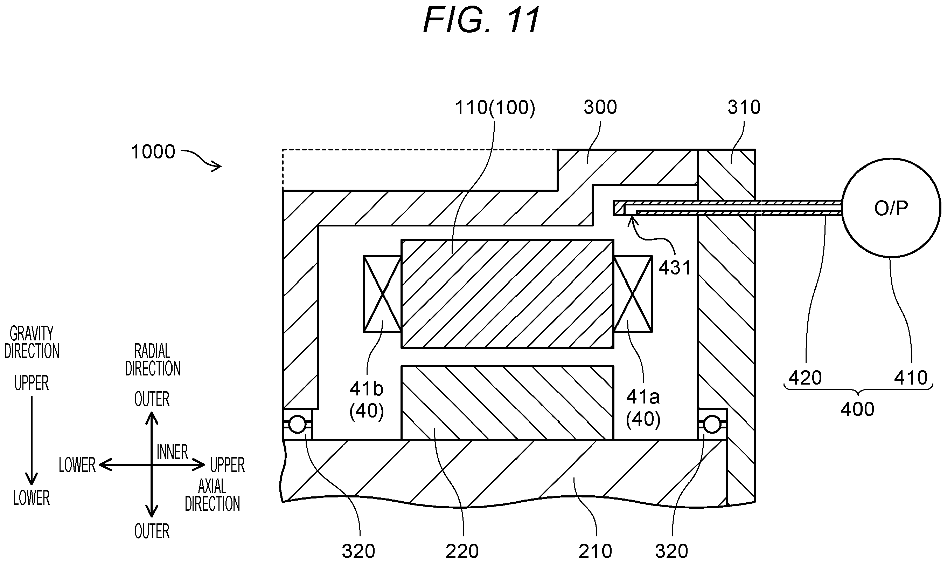

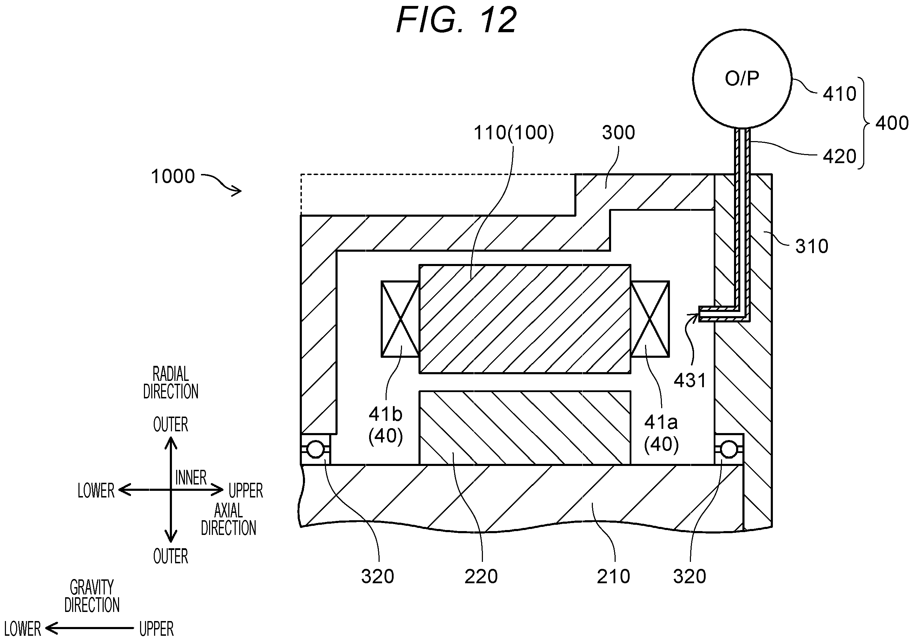

Fig. 11 is a schematic cross-sectional view of a motor according to another modification taken along an axial direction of the motor. Fig. 12 is a schematic cross-sectional view of a motor according to yet another modification taken along an axial direction of the motor.

Supply pipe 420 including main pipe 430 and branch pipe 440 has been described in the first and second exemplary embodiments. Only one supply pipe 420 may be formed. For example, supply pipe 420 may have a shape including only main pipe 430 illustrated in Fig. 1A as illustrated in Fig. 11. Alternatively, supply pipe may have a shape including only branch pipe 440.

Cooling device 400 is attached to motor 1000 from a direction that may be changed in accordance with a direction in which motor 1000 is attached to an object to be installed.

For example, motor 1000 may be installed with the gravity direction that is along the axial direction as illustrated in Fig. 12. In such a case, oil pump 410 may be installed on an outer peripheral side in the radial direction as illustrated in Fig. 12. In this case, supply pipe 420 extends to the inside of motor case 300 through the inside of end plate 310 as with branch pipe 440 illustrated in Fig. 1A. When first injection port 431 is located above coil 40 in the gravity direction as illustrated in Fig. 12, operational effects as in the first and second exemplary embodiments, and the like described above, can be achieved.

### INDUSTRIAL APPLICABILITY

The stator of the present disclosure can ensure heat dissipation at each coil in the stator when the coil is cooled by a refrigerant. The present disclosure is thus useful for application to a high-efficiency motor.

### REFERENCE MARKS IN THE DRAWINGS

- 10: teeth
- 20: yoke
- 30: slot
- 40: coil
- 41: coil end
- 41a: first coil end
- 41b: second coil end
- 42: side
- 50: insulator
- 100: stator
- 110: stator core
- 200: rotor
- 210: rotating shaft
- 220: rotor core
- 230: magnet
- 300: motor case
- 310: end plate
- 320: bearing
- 400: cooling device
- 410: oil pump (pump)
- 420: supply pipe
- 430: main pipe
- 431, 432: first injection port
- 440, 450: branch pipe
- 441, 451: second injection port
- 1000: motor

## Claims

1. A stator provided in a motor, the stator comprising:
a stator core formed to surround an axial center of the motor and having a plurality of teeth; and
a plurality of coils respectively attached to the plurality of teeth, the plurality of coils being each formed by winding a conductive wire having a quadrangular cross section and stacking n turns of the conductive wire, where n is an integer of two or more, the plurality of teeth being connected to an inner periphery of the stator core at intervals along a circumferential direction of the motor,
wherein one of the plurality of coils disposed in the circumferential direction includes a coil end that is an end part in an axial direction in which the axial center extends in the coil, the coil end being different in height from other coils.

2. The stator according to Claim 1, wherein the plurality of coils include a group of coils equal in height of the coil end, and one coil different in height of the coil end from the group of coils and disposed among the group of coils.

3. A motor comprising:
a rotor having a rotating shaft extending in the axial direction;
the stator according to Claim 1 or 2, the stator being provided coaxially with the rotor and at a predetermined interval from the rotor;
a motor case that accommodates the stator and the rotor inside; and
a cooling device that supplies a refrigerant toward one of the coils, the cooling device including
a pump that discharges the refrigerant, and
a supply pipe that is connected to the pump while extending inside the motor case, and that supplies the refrigerant discharged from the pump toward the coil.

4. The motor according to Claim 3, wherein the supply pipe includes a second injection port for injecting the refrigerant in the axial direction.

5. The motor according to Claim 4, wherein when the motor is used in which the axial direction intersects a gravity direction, the supply pipe further includes a first injection port for injecting the refrigerant from above in the gravity direction.

6. The motor according to Claim 4 or 5, wherein the coil end of the coil to which the refrigerant is directly injected has a height lower than a height of the coil end of the coil to which the refrigerant is not directly injected.

7. The motor according to any one of Claims 4 to 6, wherein
the coil end includes a first coil end that is one end part in the axial direction and a second coil end that is another end part, and
the refrigerant is injected toward the first coil end.

8. The motor according to Claim 7, wherein the refrigerant is injected toward both the first coil end and the second coil end.

9. The motor according to Claim 7 or 8, wherein the first coil end has a surface area that is smaller than a surface area of the second coil end.

10. The motor according to Claim 7 or 8, wherein the first coil end has a surface area that is larger than a surface area of the second coil end.
